# EUROPEAN PATENT APPLICATION

(11) **EP 1 262 104 A1**
(43) Date of publication of application: **04.12.2002**
(21) Application number: 02009415.7
(22) Date of filing: 25.04.2002
(51) Int. Cl.: A23G 9/22, A23G 9/08

(54) **Machine for dispensing beverages or cold or hot mixtures**

(30) Priority: 02.05.2001 IT MI20010239 U
(71) Applicant: Cianci, Rocco, 20126 Milan (IT)
(72) Inventor: Cianci, Rocco, 20126 Milan (IT)
(74) Representative: Gervasi, Gemma, Dr.

(57) **Abstract**

A machine for dispensing beverages or cold or hot mixtures is described, in which a unit (3) comprising a scraper (4) and means (5) for cooling/heating the beverage or the mixture is vertically mobile, allowing the container (2) containing the beverage or the mixture to be removed and/or replaced without requiring to disassemble the aforesaid unit (3).

The vertical movement of the aforesaid unit (3) is obtained by hinging it to a support (10) integral with the base (1) of the machine and/or by fixing it to a vertically sliding support (12).

## Description

### Field of the invention.

The invention consists of a machine for dispensing beverages or cold or hot mixtures, in which the unit comprising a scraper and means for cooling/heating the beverage or the mixture is vertically mobile as it is hinged to a support integral with the base of the machine and/or it is fixed to a vertically sliding support.

### Prior art.

Known machines, widely diffused on the market, for dispensing beverages or cold or hot mixtures, comprise at least one base (which comprises means suitable to dispense the beverage or the cold or hot mixture) and at least one container (closed by a lid and containing the beverage or the mixture), positioned inside which there is a unit comprising a scraper and means suitable to cool or heat the beverage or mixture; these machines normally also comprise a further illuminated lid to allow the public improved viewing of the content of the container(s).

In known machines the aforesaid unit is borne by a support integral with the base, is introduced horizontally into the container through a hole made in a wall of the container and provided with a seal and is held in place by a lock or by other functionally equivalent means suitable to prevent the unit from coming accidentally out of the container.

In known machines, when a container is to be removed (for example to be cleaned) and/or replaced (for example because it is empty or because the product offered for sale is to be changed) it is necessary to disassemble the aforesaid unit by removing it horizontally from its seat, if necessary after having removed from the container the beverage or the mixture still contained therein.

The Applicant has improved the prior art machines for dispensing beverages or cold or hot mixtures so that they are now immune from the aforesaid limits and disadvantages: in a machine according to the invention the unit comprising the scraper and means for cooling/heating the beverage or the mixture is vertically mobile, allowing the container with the beverage or the mixture to be removed and/or replaced without requiring to disassemble the unit.

### Summary of the invention.

The object of the present invention is a machine for dispensing beverages or cold or hot mixtures, comprising at least one base (comprising means suitable to dispense the beverage or the cold or hot mixture) and at least one container, containing the beverage or mixture, positioned inside which there is a unit comprising a scraper and means suitable to cool or heat the beverage or the mixture, where the aforesaid unit is vertically mobile.

Preferably, the vertical movement of the aforesaid unit is realised:
- by hinging it (if necessary using a double hinge) to a support integral with the base;
- by fixing it rigidly to a telescoping support sliding vertically in relation to the base;
- by hinging it to the free end of a telescoping support sliding vertically in relation to the base.

### List of figures.

The invention shall now be better described with reference to non-limiting examples of embodiment illustrated in the enclosed figures, where:
- figure 1 shows schematically a side view of a first embodiment of a machine modified according to the invention;
- figure 2 shows schematically an axonometric view of the machine shown by figure 1, comprising two containers;
- figure 3 shows schematically an exploded side view of the machine shown by figure 1;
- figures 4 to 6 show schematically exploded side views of three further embodiments of a machine modified according to the invention.

In the enclosed figures, the corresponding elements shall be identified through the same numerical references.

### Detailed description.

The object of the present invention is a machine for dispensing beverages or cold or hot mixtures, comprising at least one base 1 (which comprises means 6 suitable to dispense the beverage or the cold or hot mixture) and at least one container 2, closed by the lid 7 and containing the beverage or the mixture, positioned inside which there is an unit 3 (comprising the scraper 4 and means 5 suitable to cool or heat the beverage or the mixture) which is vertically mobile, allowing the container 2 to be removed (for example to be cleaned) and/or replaced (for example because it is empty or to change the product offered) without requiring to disassemble the unit 3.

The base 1, the container 2, the unit 3 (comprising the scraper 4 and means 5 suitable to cool or heat the beverage or the mixture), the means 6 to dispense the beverage or the cold or hot mixture, the lid 7 and the further illuminated lid 8 (if present) shall not be described herein as they are of commercial type and in any case they are known to a person skilled in the art; moreover, to simplify the graphic representation, means (such as wires and/or flexible pipes) which connect the motor of the scraper 4 and/or means 5 with supply means, heating means and/or cooling means positioned in the base 1 have been omitted from the enclosed figures.

In the enclosed figures the invention shall be described with reference to a machine for dispensing cold mixtures (such as ice cream, water-ices, etc.) although, without departing from the scope of the invention, the improvements described herein may be applied to machines for dispensing hot or cold beverages or hot mixtures.

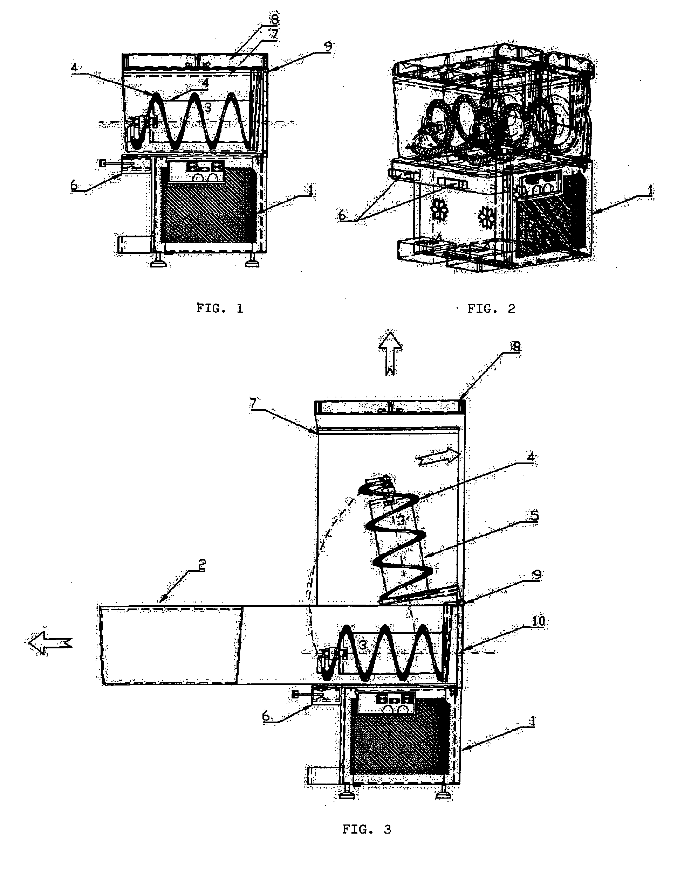

Figure 1 shows schematically a side view of a machine for dispensing cold mixtures; figure 1 shows the base 1, a container 2, the unit 3 (comprising the scraper 4 and means 5 for cooling the mixture) positioned inside the container 2, the dispensing means 6, the lid 7 of the container 2 and the further illuminated lid 8.

This machine has been modified according to the invention by adding a hinge 9, better described with reference to the exploded view shown by figure 3.

Figure 2 shows schematically an axonometric view of the machine shown by figure 1, comprising two dispensers, assembled on a base 1 that carries the dispensing means 6: each dispenser comprises a container 2, positioned inside which there is an unit 3.

Figure 3 shows schematically the exploded side view of a first embodiment of a machine modified according to the invention; in the embodiment illustrated in figure 3 the unit 3 is vertically mobile as it is hinged, by means of the hinge 9, to a support 10 integral with the base 1.

The exploded side view in figure 3 shows the base 1 which bears the dispensing means 6, the container 2 removed from its seat, the unit 3 (comprising the scraper 4 and means 5 to cool the mixture) hinged by the hinge 9 to a support 10 integral with the base 1, the lid 7 and the further illuminated lid 8.

In figures 3 to 6 reference 3' indicates the unit 3 in the raised position; advantageously, the angle of rotation of the unit 3 may be adjusted in a manner per se known, such as by means of a stop lock comprising an adjusting screw or other functionally equivalent means, per se known.

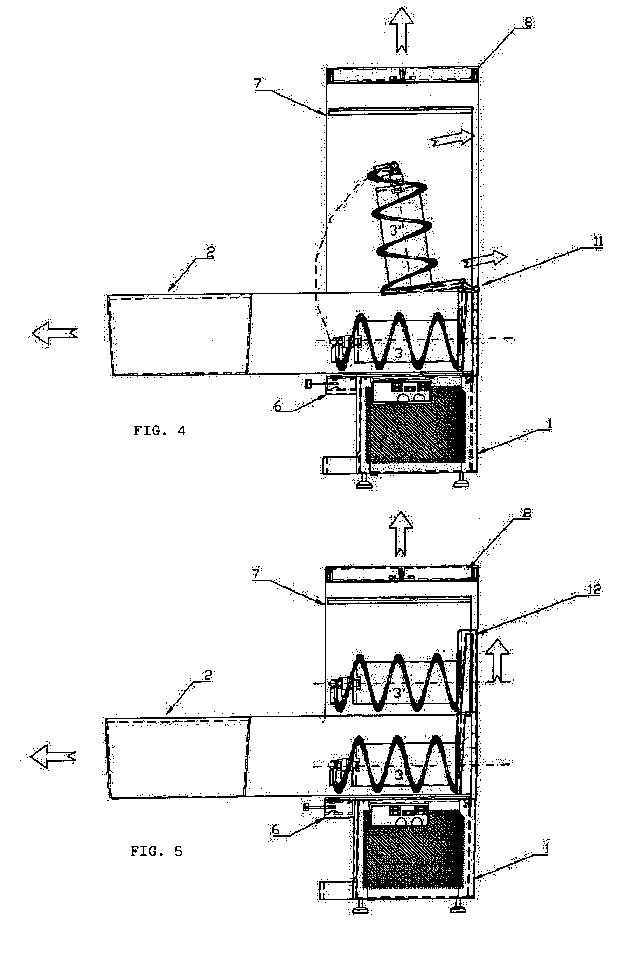

Figure 4 shows schematically an exploded side view of a second embodiment of a machine modified according to the invention, which differs from the one described by figure 3 essentially in that the unit 3 (indicated with 3' when it is in the raised position) is hinged to the support 10 integral with the base 1 by a double hinge 11, which allows an easier adjustment, in a manner per se known, of the angle of rotation of the unit 3, for example by means of a stop lock comprising an adjusting screw or other functionally equivalent means, per se known.

Figure 5 shows schematically an exploded side view of a third embodiment of a machine modified according to the invention, which differs from the one described by figure 3 essentially in that the unit 3 (indicated with 3' when it is in the raised position) is fixed to a telescoping support 12 sliding vertically in relation to the base 1.

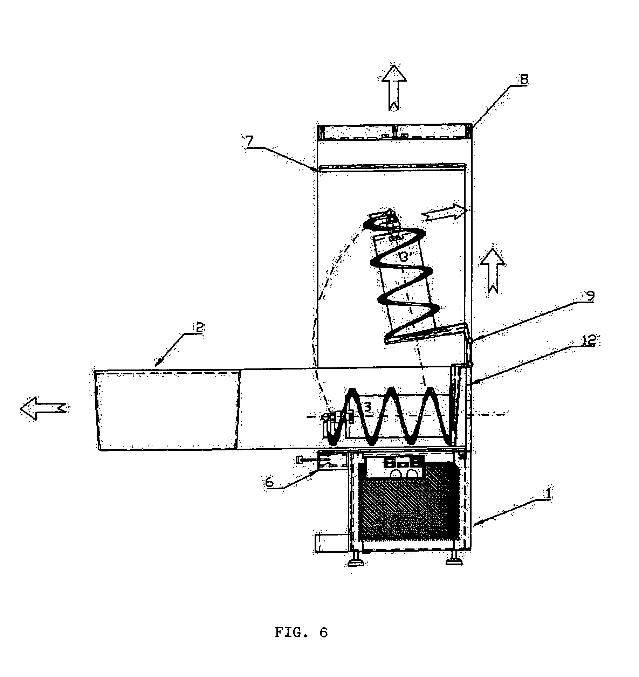

Figure 6 shows schematically an exploded side view of a fourth embodiment of a machine modified according to the invention, which differs from the one described in figure 3 essentially in that the unit 3 (indicated with 3' when it is in the raised position) is hinged at the free end of the telescoping support 12 sliding vertically in relation to the base 1.

In figure 6 the unit 3 is hinged to the free end of the telescoping support 12 by means of a hinge 9 but, without departing from the scope of the invention, the unit 3 may be hinged at the free end of the telescoping support 12 by means of the double hinge 11; advantageously this hinge (9 or 11) allows adjustment of the angle of rotation of the unit 3 in a manner per se known, such as by means of a stop lock comprising an adjusting screw or by means of other functionally equivalent means, per se known.

Without departing from the scope of the invention it is possible a person skilled in the art to make all the modifications and improvements to the modified machine forming the object of the present description which are suggested by normal experience and by natural technical evolution.

## Claims

1. Machine for dispensing beverages or cold or hot mixtures, comprising at least one base (1) and at least one container (2), containing the beverage or the mixture, positioned inside which there is a unit (3) comprising a scraper (4) and means (5) suitable to cool or heat the beverage or the mixture, **characterised in that** the unit (3) is vertically mobile.

2. Machine as claimed in claim 1, **characterised in that** the unit (3) is hinged to a support (10) integral with the base (1).

3. Machine as claimed in claim 2, **characterised in that** the unit (3) is hinged to the support (10) integral with the base (1) by means of a double hinge (11).

4. Machine as claimed in claim 1, **characterised in that** the unit (3) is fixed to a telescoping support (12) sliding vertically in relation to the base (1).

5. Machine as claimed in claim 4, **characterised in that** the unit (3) is hinged to the free end of the telescoping support (12) sliding vertically in relation to the base (1).
